# EUROPÄISCHE PATENTANMELDUNG

(11) **EP 1 593 868 A1**
(43) Veröffentlichungstag der Anmeldung: **09.11.2005**
(21) Anmeldenummer: 05008958.0
(22) Anmeldetag: 23.04.2005
(51) Int. Cl.: F16D 13/64, F16D 69/04

(54) **Federungssystem für Belagsegmente sowie damit versehene Kupplungsscheiben**

(30) Priorität: 06.05.2004 DE 102004022864; 09.06.2004 DE 102004028096
(71) Anmelder: LuK Lamellen und Kupplungsbau Beteiligungs KG, 77815 Bühl (DE)
(72) Erfinder: Hässler, Martin, Dr., 76185 Karlsruhe (DE); Tuli, Zoltan, 77830 Bühlertal (DE)

(57) **Zusammenfassung**

Die Erfindung betrifft eine Kupplungsscheibe, insbesondere zur Verwendung mit einer Kraftfahrzeugkupplung, mit einer Mitnehmerscheibe, an der Belagtragelemente (24,25) befestigt sind, die paarweise in axialer Richtung gegeneinander vorgespannt sind.

Um eine verbesserte axiale Vorspannung zu ermöglichen, sind die Belagtragelemente eines Paares jeweils mit den in axialer Richtung gegenüberliegenden Belagtragelementen der in Umfangsrichtung benachbarten Paare mittels im Umfangsrichtung hervorstehender Zungen (41-44) verschränkt.

## Beschreibung

Die Erfindung betrifft eine Kupplungsscheibe, insbesondere zur Verwendung mit einer Kraftfahrzeugkupplung, mit einer Mitnehmerscheibe, an der Belagtragelemente befestigt sind, die auf vielfältige Weise paarweise in axialer Richtung gegeneinander vorgespannt sind.

Aus der französischen Offenlegungsschrift FR 2 600 732 A1 ist eine Kupplungsscheibe bekannt, bei der die Belagtragelemente eines Paares mit Hilfe von Federelementen gegeneinander vorgespannt sind, die wiederum miteinander verschränkt sind.

Aufgabe der Erfindung ist es, eine Kupplungsscheibe, insbesondere zur Verwendung mit einer Kraftfahrzeugkupplung, mit einer Mitnehmerscheibe, an der Belagtragelemente befestigt sind, die paarweise in axialer Richtung gegeneinander vorgespannt sind, zu schaffen, die eine gleichmäßigere axiale Vorspannung der Belagtragelemente ermöglicht und kostengünstig herstellbar ist.

Die Aufgabe ist bei einer Kupplungsscheibe, insbesondere zur Verwendung mit einer Kraftfahrzeugkupplung, mit einer Mitnehmerscheibe, an der Belagtragelemente befestigt sind, die paarweise in axialer Richtung gegeneinander vorgespannt sind, dadurch gelöst, dass die Belagtragelemente eines Paares jeweils mit den in axialer Richtung gegenüberliegenden Belagtragelementen der in Umfangsrichtung benachbarten Paare verschränkt sind. Der Begriff axiale Richtung bezieht sich auf die Drehachse der Kupplungsscheibe. Durch die wechselseitige Verschränkung von Belagtragelementen unterschiedlicher Paare wird eine in Umfangsrichtung einheitliche axiale Vorspannung ermöglicht.

Ein bevorzugtes Ausführungsbeispiel der Kupplungsscheibe ist dadurch gekennzeichnet, dass an jedem Belagtragelement mindestens zwei Verschränkungszungen vorgesehen sind, die sich in entgegengesetzten Umfangsrichtungen erstrecken und in radialer Richtung versetzt zueinander angeordnet sind. Dadurch werden alle Belagtragelemente jeweils mit den in Umfangsrichtung benachbart gegenüberliegenden Belagtragelementen in Eingriff gebracht.

Ein weiteres bevorzugtes Ausführungsbeispiel der Kupplungsscheibe ist dadurch gekennzeichnet, dass an jedem Belagtragelement mindestens vier Verschränkungszungen vorgesehen sind, die sich paarweise in entgegengesetzten Umfangsrichtungen erstrecken und in radialer Richtung paarweise versetzt zueinander angeordnet sind. Dadurch wird ein Verkippen der Belagtragelemente in radialer Richtung, das heißt um eine in Umfangsrichtung verlaufende Achse, verhindert.

Ein weiteres bevorzugtes Ausführungsbeispiel der Kupplungsscheibe ist dadurch gekennzeichnet, dass alle Belagtragelemente die gleiche Gestalt aufweisen. Dadurch wird die Herstellung der erfindungsgemäßen Kupplungsscheibe erheblich vereinfacht.

Ein weiteres bevorzugtes Ausführungsbeispiel der Kupplungsscheibe ist dadurch gekennzeichnet, dass die Belagtragelemente im Wesentlichen die Gestalt eines Kreisringsektors aufweisen, von dem die Verschränkungszungen ausgehen. Vorzugsweise sind die Verschränkungszungen radial außen an den Belagtragelementen angeordnet.

Ein weiteres bevorzugtes Ausführungsbeispiel der Kupplungsscheibe ist dadurch gekennzeichnet, dass die Belagtragelemente radial innen einen Befestigungsabschnitt aufweisen. Der Befestigungsabschnitt umfasst zum Beispiel mehrere Durchgangslöcher zur Aufnahme von Befestigungsnieten, mit deren Hilfe die Belagtragelemente an der Mitnehmerscheibe befestigt sind.

Ein weiteres bevorzugtes Ausführungsbeispiel der Kupplungsscheibe ist dadurch gekennzeichnet, dass die Belagtragelemente im Anschluss an den Befestigungsabschnitt einen gewellten Federbereich aufweisen, dessen Wellenausbreitungsrichtung in radialer Richtung verläuft. An den Federbereich schließt sich radial außen ein Distanzabschnitt an, der in axialer Richtung von dem Distanzabschnitt des in axialer Richtung gegenüberliegenden Belagtragelements beabstandet ist.

Ein weiteres bevorzugtes Ausführungsbeispiel der Kupplungsscheibe ist dadurch gekennzeichnet, dass in axialer Richtung zwischen zwei Belagtragelementen jeweils mindestens ein Federelement, insbesondere zwei Federelemente, angeordnet sind. Durch das Federelement beziehungsweise die Federelemente hindurch werden zwei ein Paar bildende Belagtragelemente in axialer Richtung vorgespannt. Zwei Belagtragelemente, zwei Federelemente und zwei Reibbelagelemente bilden jeweils eine Reibeinheit.

Ein weiteres bevorzugtes Ausführungsbeispiel der Kupplungsscheibe ist dadurch gekennzeichnet, dass das Federelement beziehungsweise die Federelemente radial innen einen Befestigungsabschnitt aufweisen. Der Befestigungsabschnitt umfasst zum Beispiel mehrere Durchgangslöcher zur Aufnahme von Befestigungsnieten, mit deren Hilfe das Federelement beziehungsweise die Federelemente an der Mitnehmerscheibe befestigt ist beziehungsweise sind.

Ein weiteres bevorzugtes Ausführungsbeispiel der Kupplungsscheibe ist dadurch gekennzeichnet, dass das Federelement beziehungsweise die Federelemente im Anschluss an den Befestigungsabschnitt einen gewellten Federbereich aufweisen, dessen Wellenausbreitungsrichtung in Umfangsrichtung verläuft. Dadurch wird ein Verkippen der Belagtragelemente in radialer Richtung, das heißt um eine in Umfangsrichtung verlaufende Achse, verhindert.

Ein weiteres bevorzugtes Ausführungsbeispiel der Kupplungsscheibe ist dadurch gekennzeichnet, das außen auf die Belagtragelemente jeweils ein Reibbelagelement aufgeklebt ist. Durch die vorzugsweise vollflächige Verklebung der Reibbelagelemente kann die komplette Belagfläche zum betriebsbedingten Verschleiß verwendet werden.

Ein weiteres bevorzugtes Ausführungsbeispiel der Kupplungsscheibe ist dadurch gekennzeichnet, dass die Belagtragelemente und die Federelemente jeweils einstückig aus Federstahl gebildet sind. Dadurch werden eine einfache Herstellung und eine gute Federwirkung gewährleistet.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:

Figur 1 eine Explosionsdarstellung einer erfindungsgemäßen Kupplungsscheibe und

Figur 2 einen vergrößerten Ausschnitt aus Figur 1.

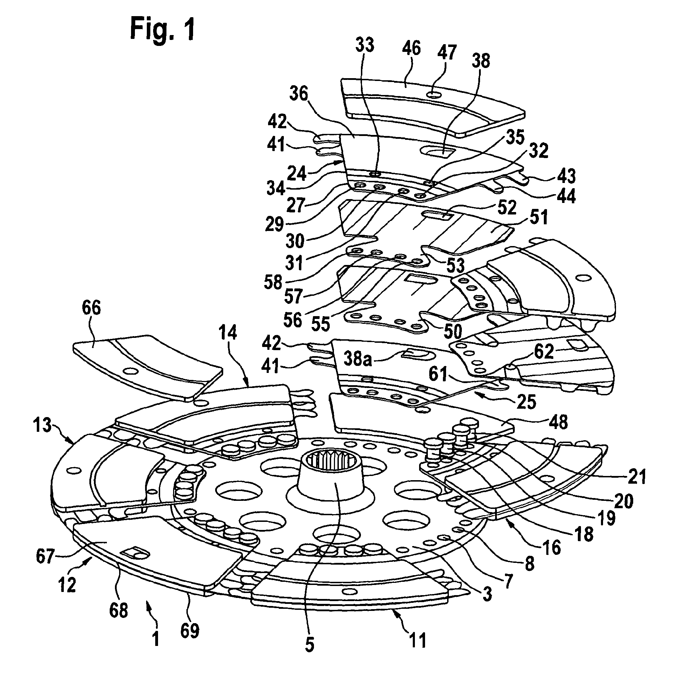

In Figur 1 ist eine Kupplungsscheibe 1 perspektivisch und teilweise in Explosionsdarstellung gezeigt. Die Kupplungsscheibe 1 wird von einer Mitnehmerscheibe 3 gebildet, von der eine zentrale Nabe 5 ausgeht. Die Nabe 5 ist mit einer Innenverzahnung ausgestattet, die dazu dient, die Nabe 5 drehfest mit einer (nicht dargestellten) Getriebeeingangswelle zu verbinden.

Radial außen sind in der Mitnehmerscheibe 3 eine Vielzahl von Durchgangslöchern 7, 8 vorgesehen, die dazu dienen, Reibeinheiten 11 bis 16 an der Mitnehmerscheibe 3 zu befestigen. Die Befestigung der Reibeinheit 16 erfolgt durch Befestigungsnieten 18 bis 21, die durch die Durchgangslöcher 7, 8 in der Mitnehmerscheibe 3 hindurch gesteckt werden.

Im Folgenden wird der Aufbau der Reibeinheiten am Beispiel der Reibeinheit 15 näher erläutert. Es wird jedoch darauf hingewiesen, dass alle Reibeinheiten genauso aufgebaut sind wie die Reibeinheit 15. Die Reibeinheit 15 umfasst zwei Belagtragelemente 24, 25, die völlig gleich aufgebaut sind. Das Belagtragelement 24 weist radial innen einen Befestigungsabschnitt 27 auf, in dem vier Durchgangslöcher 29 bis 32 in Umfangsrichtung gleichmäßig voneinander beabstandet sind. Die Durchgangslöcher 29 bis 32 dienen zur Befestigung des Belagtragelements 24 an der Mitnehmerscheibe 3. Im Anschluss an den Befestigungsabschnitt 27 umfasst das Belagtragelement 24 einen Federbereich 34 oder Federabschnitt, der so gewählt ist, dass ein im Anschluss an den Federbereich 34 ausgebildeter Distanzabschnitt 36 in einer Ebene angeordnet ist, die parallel zu dem Befestigungsabschnitt 27 von diesem beabstandet ist. In dem Federbereich 34 sind zwei Durchgangslöcher 33 und 35 ausgespart, die zum Positionieren des Belagtragelements 24 bei der Montage dienen.

Das Belagtragelement 24 hat die Gestalt eines Kreisringsektors, von dem in Umfangsrichtung jeweils zwei Verschränkungszungen 41, 42 und 43, 44 in entgegengesetzten Richtungen ausgehen. Die an einer Seite des Belagtragelements 24 abstehenden Verschränkungszungen 41 und 42 bilden ein Paar, das in radialer Richtung relativ zu den auf der anderen Seite des Belagtragelements 24 abstehenden Verschränkungszungen 43 und 44 beabstandet ist. Die Verschränkungszunge 43 ist in radialer Richtung zwischen den Verschränkungszungen 41 und 42 angeordnet. Die Verschränkungszunge 41 ist in radialer Richtung zwischen den Verschränkungszungen 43 und 44 angeordnet.

Auf die Oberseite des Distanzabschnitts 36 des Belagtragelements 24 ist ein Reibbelag 46 aufgeklebt. Der Reibbelag 46 hat im Wesentlichen die Gestalt eines Kreisringsektors. In dem Reibbelag 46 ist ein Durchgangsloch 47 ausgespart, das dazu dient, bei der Montage Zugang zu der darunter befindlichen Federzunge 38 zu erhalten die mit der gegenüberliegenden Federzunge 38a des gegenüberliegenden Belagtragelements 25 in Eingriff gebracht werden kann. An der Unterseite des Belagtragelements 25 ist ein Reibbelag 48 befestigt. In axialer Richtung zwischen den Belagtragelementen 24 und 25 sind zwei Federelemente 50 und 51 angeordnet, die gleich ausgebildet sind. Die Federelemente 50 und 51 sind gewellt ausgebildet, wobei die Wellenausbreitungsrichtung in Umfangsrichtung verläuft. In dem Federelement 51 ist ein Durchgangsloch 52 ausgespart, das eine Durchgriffsmöglichkeit für die Federzunge 38 bildet. Radial innen ist an dem Federelement 51 ein Befestigungsabschnitt 53 ausgebildet, der vier in Umfangsrichtung gleichmäßig voneinander beabstandete Durchgangslöcher 55 bis 58 aufweist. Die Durchgangslöcher 55 bis 58 sind im montierten Zustand deckungsgleich mit den Durchgangslöchern 29 bis 32 in dem Befestigungsabschnitt 27 des Belagtragelements 24 angeordnet.

Das Belagtragelement 25 ist genauso ausgebildet wie das Belagtragelement 24. Allerdings ist das Belagtragelement 25 gegenüber dem Belagtragelement 24 um eine radiale Drehachse um 180 Grad verdreht angeordnet. An dem Belagtragelement 25 sind auf einer Seite zwei Verschränkungszungen 61 und 62 ausgebildet, die den Verschränkungszungen 41 und 42 des Belagtragelements 24 entsprechen. Auf der anderen Seite sind an dem Belagtragelement 25 zwei Verschränkungszungen 63 und 64 ausgebildet, die den Verschränkungszungen 43 und 44 des Belagtragelements 24 entsprechen. In der in Figur 1 dargestellten Anordnung der Belagtragelemente 24 und 25 wird die Verschränkungszunge 63 des Belagtragelements 25 zwischen den Verschränkungszungen 41 und 42 des Belagtragelements 24 angeordnet. Analog wird die Verschränkungszunge 43 des Belagtragelements 24 zwischen den Verschränkungszungen 61 und 62 des Belagtragelements 25 angeordnet.

In Figur 1 weist die Reibeinheit 12 einen Reibbelag 66 auf, der oberhalb der Reibeinheit 12 angeordnet ist, so dass das darunter angeordnete Belagtragelement 67 sichtbar ist. Unterhalb des Belagtragelements 67 ist in einem axialen Abstand dazu ein Belagtragelement 68 angeordnet. An der Unterseite des Belagtragelements 68 ist durch Kleben ein Reibbelag 69 befestigt.

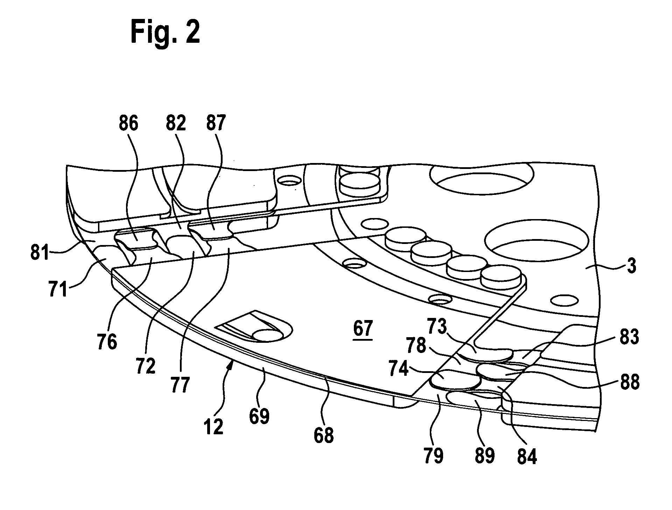

In Figur 2 ist ein Ausschnitt mit der Reibeinheit 12 und den in Umfangsrichtung dazu benachbarten Reibeinheiten 11 und 13 vergrößert dargestellt. In Figur 2 sieht man, dass von dem unteren Belagtragelement 68 vier Verschränkungszungen 71 bis 74 ausgehen. Von dem oberen Belagtragelement 67 gehen vier Verschränkungszungen 76 bis 79 aus.

Die Verschränkungszungen 71 und 72 des unteren Belagtragelements 68 befinden sich in Anlage an zwei Verschränkungszungen 81 und 82 eines oberen Belagtragelements der Reibeinheit 13.

Die beiden anderen Verschränkungszungen 73 und 74 des unteren Belagtragelements 68 befinden sich in Anlage an zwei Verschränkungszungen 83 und 84 eines oberen Belagtragelements der Reibeinheit 11. Analog befinden sich die Verschränkungszungen 76 und 77 des oberen Belagtragelements 67 in Anlage an zwei Verschränkungszungen 86 und 87 eines unteren Belagtragelements der Reibeinheit 13. Die anderen beiden Verschränkungszungen 78 und 79 des oberen Belagtragelements 67 befinden sich in Anlage an zwei Verschränkungszungen 88 und 89 eines unteren Belagtragelements der Reibeinheit 11.

Gemäß der vorliegenden Erfindung bilden zwei in axialer Richtung gegenüberliegende Belagtragelemente zusammen mit zwei dazwischen angeordneten mehrfach gewellten Federelementen, die zur Ausbildung der Federung vorgesehen sind, ein Paket von vier Federblechen, das einen gemeinsamen Fußbereich mit vier übereinander liegenden Befestigungsabschnitten ausbildet, der zur Befestigung des Pakets an der Mitnehmerscheibe dient. An der Außenseite des Pakets sind die Reibbeläge aufgeklebt. Die Begrenzung der axialen Ausdehnung der gesamten Anordnung erfolgt über die Verschränkung der Verschränkungszungen, die aus speziell gestalteten Bereichen der Belagtragelemente gebildet werden. Durch die gewählte Asymmetrie können identische Teile schwungradseitig und anpressplattenseitig verwendet werden. Die Belagtragelemente werden sowohl als Verstärkungsblech für das Belagmaterial als auch zur Momentenübertragung und als Mittel zur Begrenzung der axialen Ausdehnung verwendet.

### Bezugszeichenliste

- 1.: Kupplungsscheibe
- 2.: -
- 3.: Mitnehmerscheibe
- 4.: -
- 5.: Nabe
- 6.: -
- 7.: Durchgangsloch
- 8.: Durchgangsloch
- 9.: -
- 10.: -
- 11.: Reibeinheit
- 12.: Reibeinheit
- 13.: Reibeinheit
- 14.: Reibeinheit
- 15.: Reibeinheit
- 16.: Reibeinheit
- 17.: -
- 18.: Niet
- 19.: Niet
- 20.: Niet
- 21.: Niet
- 22.: -
- 23.: -
- 24.: Belagtragelement
- 25.: Belagtragelement
- 26.: -
- 27.: Befestigungsabschnitt
- 28.: -
- 29.: Durchgangsloch
- 30.: Durchgangsloch
- 31.: Durchgangsloch
- 32.: Durchgangsloch
- 33.: Durchgangsloch
- 34.: Federbereich
- 35.: Durchgangsloch
- 36.: Distanzabschnitt
- 37.: -
- 38.: Federzunge
- 38a: Federzunge
- 39.: -
- 40.: -
- 41.: Verschränkungszunge
- 42.: Verschränkungszunge
- 43.: Verschränkungszunge
- 44.: Verschränkungszunge
- 45.: -
- 46.: Reibbelag
- 47.: Durchgangsloch
- 48.: Reibbelag
- 49.: -
- 50.: Federelement
- 51.: Federelement
- 52.: Durchgangsloch
- 53.: Befestigungsabschnitt
- 54.: -
- 55.: Durchgangsloch
- 56.: Durchgangsloch
- 57.: Durchgangsloch
- 58.: Durchgangsloch
- 59.: -
- 60.: -
- 61.: Verschränkungszunge
- 62.: Verschränkungszunge
- 63.: Verschränkungszunge
- 64.: Verschränkungszunge
- 65.: -
- 66.: Reibbelag
- 67.: Belagtragelement
- 68.: Belagtragelement
- 69.: Reibbelag
- 70.: -
- 71.: Verschränkungszunge
- 72.: Verschränkungszunge
- 73.: Verschränkungszunge
- 74.: Verschränkungszunge
- 75.: -
- 76.: Verschränkungszunge
- 77.: Verschränkungszunge
- 78.: Verschränkungszunge
- 79.: Verschränkungszunge
- 80.: -
- 81.: Verschränkungszunge
- 82.: Verschränkungszunge
- 83.: Verschränkungszunge
- 84.: Verschränkungszunge
- 85.: -
- 86.: Verschränkungszunge
- 87.: Verschränkungszunge
- 88.: Verschränkungszunge
- 89.: Verschränkungszunge

## Patentansprüche

1. Kupplungsscheibe, insbesondere zur Verwendung mit einer Kraftfahrzeugkupplung, mit einer Mitnehmerscheibe (3), an der Belagtragelemente (67,68) befestigt sind, die paarweise in axialer Richtung gegeneinander vorgespannt sind, **dadurch gekennzeichnet, dass** die Belagtragelemente (67,68) eines Paares (12) jeweils mit den in axialer Richtung gegenüberliegenden Belagtragelementen der in Umfangsrichtung benachbarten Paare (11,13) verschränkt sind.

2. Kupplungsscheibe nach Anspruch 1, **dadurch gekennzeichnet, dass** an jedem Belagtragelement (67,68) mindestens zwei Verschränkungszungen (76-79,71-74) vorgesehen sind, die sich in entgegengesetzten Umfangsrichtungen erstrecken und in radialer Richtung versetzt zueinander angeordnet sind.

3. Kupplungsscheibe nach einem der vorhergehenden Ansprüche, **dadurch gekennzeichnet, dass** an jedem Belagtragelement (67,68) mindestens vier Verschränkungszungen (76-79,71-74) vorgesehen sind, die sich paarweise in entgegengesetzten Umfangsrichtungen erstrecken und in radialer Richtung paarweise versetzt zueinander angeordnet sind.

4. Kupplungsscheibe nach einem der vorhergehenden Ansprüche, **dadurch gekennzeichnet, dass** alle Belagtragelemente (67,68) die gleiche Gestalt aufweisen.

5. Kupplungsscheibe nach einem der vorhergehenden Ansprüche, **dadurch gekennzeichnet, dass** die Belagtragelemente (67,68) im Wesentlichen die Gestalt eines Kreisringsektors aufweisen, von dem die Verschränkungszungen ausgehen.

6. Kupplungsscheibe nach einem der vorhergehenden Ansprüche, **dadurch gekennzeichnet, dass** die Belagtragelemente (67,68) radial innen einen Befestigungsabschnitt aufweisen.

7. Kupplungsscheibe nach Anspruch 6, **dadurch gekennzeichnet, dass** die Belagtragelemente (67,68) im Anschluss an den Befestigungsabschnitt einen gewellten Federbereich aufweisen, dessen Wellenausbreitungsrichtung in radialer Richtung verläuft.

8. Kupplungsscheibe nach einem der vorhergehenden Ansprüche, **dadurch gekennzeichnet, dass** in axialer Richtung zwischen zwei Belagtragelementen (67,68) jeweils mindestens ein Federelement, insbesondere zwei Federelemente, angeordnet sind.

9. Kupplungsscheibe nach Anspruch 8, **dadurch gekennzeichnet, dass** das Federelement beziehungsweise die Federelemente radial innen einen Befestigungsabschnitt aufweisen.

10. Kupplungsscheibe nach Anspruch 9, **dadurch gekennzeichnet, dass** das Federelement beziehungsweise die Federelemente im Anschluss an den Befestigungsabschnitt einen gewellten Federbereich aufweisen, dessen Wellenausbreitungsrichtung in Umfangsrichtung verläuft.

11. Kupplungsscheibe nach einem der vorhergehenden Ansprüche, **dadurch gekennzeichnet, dass** außen auf die Belagtragelemente (67,68) jeweils ein Reibbelagelement (66,69) aufgeklebt ist.

12. Kupplungsscheibe nach einem der vorhergehenden Ansprüche, **dadurch gekennzeichnet, dass** die Belagtragelemente (67,68) und die Federelemente jeweils einstückig aus Federstahl gebildet sind.
